# EUROPÄISCHE PATENTANMELDUNG

(11) **EP 3 438 994 A1**
(43) Veröffentlichungstag der Anmeldung: **06.02.2019**
(21) Anmeldenummer: 18185751.7
(22) Anmeldetag: 26.07.2018
(51) Int. Cl.: H01B 7/42, H02G 9/02, H02G 9/06, H02G 3/03

(54) **HOCHSPANNUNGSERDKABELANORDNUNG**

(30) Priorität: 01.08.2017 DE 102017117434
(71) Anmelder: Max Streicher GmbH & Co. KG aA, 94469 Deggendorf (DE)
(72) Erfinder: Huber, Siegmund, 94533 Buchhofen-Ottmaring (DE); Paukner, Wolfgang, 94526 Metten (DE)
(74) Vertreter: Manitz Finsterwald Patentanwälte PartmbB

(57) **Zusammenfassung**

Die vorliegende Erfindung betrifft eine Hochspannungserdkabelanordnung mit einem Kabel, das einen elektrischen Leiter, eine den elektrischen Leiter umgebende Isolationsmaterialschicht und einen die Isolationsmaterialschicht umgebenden Kabelmantel aufweist, wobei die Hochspannungserdkabelanordnung zur Wärmeableitung an die Hochspannungserdkabelanordnung umgebendes Erdreich eine profilierte Außenumfangsoberfläche aufweist.

## Beschreibung

Die vorliegende Erfindung betrifft eine Hochspannungserdkabelanordnung für den Betrieb mit Spannungen von 110 kV DC oder AC oder darüber, insbesondere von 320 kV DC bzw. 380 kV AC oder darüber und insbesondere vorzugsweise bei bzw. im Bereich von 525 kV DC, die ein Kabel aufweist, das einen elektrischen Leiter, vorzugsweise aus Kupfer oder Aluminium, zumindest eine Isolationsmaterialschicht, die den elektrischen Leiter umgibt, und einen Kabelmantel aus beispielweise PVC, PP oder PE umfasst, der die zumindest eine Isolationsmaterialschicht umgibt.

Derartige Hochspannungserdkabelanordnungen sind grundsätzlich bekannt und bedürfen daher keiner genaueren Beschreibung.

Aufgrund der enormen Betriebsspannungen, denen derartige Hochspannungserdkabelanordnungen ausgesetzt sind, entwickeln diese beim Betrieb eine nicht unerhebliche Wärmemenge, die aufgrund der Tatsache, dass derartige Hochspannungserdkabelanordnungen im Erdreich oder in beliebigen Baustoffen wie beispielweise Sand, Beton, Gemischen aus Waser und Bentonit, Flüssigboden oder dergleichen verlegt werden, häufig nicht in der gewünschten Weise abgeleitet werden kann. Insofern kann es beim Betrieb derartiger Hochspannungserdkabelanordnungen zu einem Wärmestau kommen, der einerseits zu Lasten der Leistungsfähigkeit und/oder der Lebensdauer der Hochspannungserdkabelanordnungen gehen und andererseits dazu führen kann, dass die Hochspannungserdkabelanordnung unmittelbar temperaturbedingt Schaden nimmt.

Der Erfindung liegt daher die Aufgabe zugrunde, eine Hochspannungserdkabelanordnung anzugeben, bei der die betriebsbedingte Wärmeentwicklung nicht zu Lasten der Leistungsfähigkeit und der Unversehrtheit der Hochspannungserdkabelanordnung geht.

Diese Aufgabe wird mit einer Hochspannungserdkabelanordnung mit den Merkmalen des Anspruchs 1 und insbesondere dadurch gelöst, dass die Hochspannungserdkabelanordnung zur Wärmeableitung an die Umgebung der Hochspannungserdkabelanordnung und insbesondere an Erdreich, das die Hochspannungserdkabelanordnung umgibt, eine profilierte Außenumfangsoberfläche aufweist. Demgegenüber weisen herkömmliche Hochspannungserdkabelanordnungen einen Kabelmantel mit einer glatten Außenumfangsoberfläche auf, was bedeutet, dass mit der profilierten Ausbildung der Außenumfangsoberfläche gemäß der vorliegenden Erfindung eine Vergrößerung der Oberfläche einhergeht, wodurch die Wärmeübertragung an die Umgebung bzw. an das die Hochspannungserdkabelanordnung umgebende Erdreich und damit die Kühlung der Hochspannungserdkabelanordnung zugunsten einer Verminderung der Betriebstemperatur der Hochspannungserdkabelanordnung verbessert wird.

Im Folgenden wird auf bevorzugte Ausführungsformen der Erfindung eingegangen, wobei sich weitere Ausführungsformen auch aus den abhängigen Ansprüchen, der Figurenbeschreibung sowie den Figuren selbst ergeben können.

So kann die Profilierung der Außenumfangsoberfläche gemäß einer Ausführungsform durch mehrere Erhebungen gebildet werden, die von der Außenumfangsoberfläche abstehen. Zusätzlich oder alternativ hierzu kann die Profilierung durch mehrere Vertiefungen gebildet werden, die in der Außenumfangsoberfläche ausgebildet sind. Zusätzlich oder alternativ zu den beiden voran genannten Profilierungsarten kann die Profilierung der Außenumfangsoberfläche durch eine Vielzahl von Oberflächenunebenheiten in Form von beispielsweise Schuppen und/oder Fäden gebildet werden, die beispielswiese durch ein Aufrauen der Außenumfangsoberfläche entstehen können. Eine derart verfilzte Oberfläche trägt zudem dazu bei, dass die Hochspannungserdkabelanordnung einen erhöhten Schutz gegenüber Beschädigungen aufweist, ohne hierzu in ein Schutzrohr eingezogen werden zu müssen.

Gemäß einer bevorzugten Ausführungsform können die zuvor erwähnten Erhebungen beispielsweise die Gestalt von Rippen oder Graten aufweisen, die von der Außenumfangsoberfläche radial nach außen abstehen. Gleichermaßen können die zuvor erwähnten Vertiefungen beispielsweise die Gestalt von in der Außenumfangsoberfläche ausgebildeten Nuten oder Kerben aufweisen.

Grundsätzlich können die Rippen bzw. Grate und/oder die Nuten bzw. Kerben annähernd beliebig orientiert sein; beispielsweise können die Rippen und/oder die Nuten ringförmig ausgebildet sein bzw. die Außenumfangsoberfläche der Hochspannungserdkabelanordnung ringförmig umgeben. Gleichermaßen können sich die Rippen und/oder die Nuten spiralförmig um die Außenumfangsoberfläche mit einer gewissen Steigung herum winden.

Gemäß einer bevorzugten Ausführungsform kann es ferner vorgesehen sein, dass die Rippen und/oder die Nuten längs der Hochspannungserdkabelanordnung verlaufen, da dies die Herstellung der Profilierung erleichtert. So können die Nuten und/oder die Rippen beispielsweise im Rahmen eines Extrusionsvorgangs zur Herstellung des Kabelmantels in die Außenumfangsoberfläche eingebracht werden, sofern die Rippen bzw. die Nuten in Längsrichtung der Hochspannungserdkabelanordnung verlaufen. Alternativ hierzu können die Nuten beispielsweise unmittelbar nach dem Extrudieren in die Außenumfangsoberfläche eingefräst, eingedrückt oder eingeschnitten werden.

Gemäß einer weiteren Ausführungsform kann die maximale Höhe der Erhebungen zwischen 20 und 400%, vorzugweise zwischen 40 und 300% und insbesondere vorzugsweise zwischen 70 und 200%, der Dicke des Kabelmantels entsprechen, und/oder kann eine maximale Tiefe der Vertiefungen zwischen 10 und 90%, vorzugweise zwischen 20 und 80% und insbesondere vorzugsweise zwischen 30 und 70%, der Dicke des Kabelmantels entsprechen. Zwar kann es sich zu Zwecken der Wärmeableitung als vorteilhaft erweisen, wenn die Erhebungen eine möglichst große Höhe bzw. die Vertiefungen eine möglichst große Tiefe aufweisen, um so eine möglichst große Oberflächenvergrößerung zu Zwecken der Wärmeübertragung an das Erdreich zu erzielen; andererseits sollte die maximale Höhe der Erhebungen bzw. die maximale Tiefe der Vertiefungen auch nicht zu groß sein, da dies zu Lasten der Biegsamkeit der Hochspannungserdkabelanordnung gehen kann.

Gemäß einer weiteren Ausführungsform kann der Kabelmantel des Kabels selbst die profilierte Außenumfangsoberfläche ausbilden. Diese Ausführungsform der erfindungsgemäßen Hochspannungserdkabelanordnung bietet sich an, wenn das Kabel unmittelbar im Erdreich verlegt wird. Wird das Kabel jedoch in einem Leer- bzw. Kabelschutzrohr aus beispielweise PVC, PP oder PE im Erdreich verlegt, kann es gemäß einer weiteren Ausführungsform vorgesehen sein, dass alternativ oder zusätzlich auch das Kabelschutzrohr die profilierte Außenumfangsoberfläche ausbildet, so dass die Wärme zunächst von dem Kabel auf das Kabelschutzrohr und von diesem über seine Profilierung ins Erdreich abgeleitet werden kann. Um dabei die Wärmeübertragung auf das Kabelschutzrohrs zu verbessern, kann es zusätzlich oder alternativ zur Profilierung der Außenumfangsoberfläche des Kabelschutzrohrs vorgesehen sein, dass die Innenwand des Kabelschutzrohrs eine profilierte Oberfläche aufweist, wobei diese Innenprofilierung hinsichtlich Form und Gestalt der zuvor beschriebenen Außenprofilierung des Kabels bzw. des Kabelschutzrohrs entsprechen kann.

Um die Wärmeübertragung von dem Kabel auf das Kabelschutzrohr zu weiter verbessern, kann der Abstand, durch den das Kabel gegenüber der Innenwand des Kabelschutzrohrs beabstandet ist, gemäß einer weiteren Ausführungsform mit einem festen oder flüssigen Material wie beispielsweise Bentonit verfüllt sein, so dass die Wärme von dem Kabel auf das Kabelschutzrohr durch Wärmeleitung übertragen werden kann.

Im Folgenden wird die Erfindung nun rein exemplarisch unter Bezugnahme auf die Zeichnungen beschrieben, in denen:
- Fig. 1: ein an sich herkömmliches Hochspannungserdkabel im Längsschnitt zeigt;
- Fig. 2: eine erfindungsgemäße Hochspannungserdkabelanordnung gemäß einer ersten Ausführungsform im Querschnitt zeigt;
- Fig. 3: eine erfindungsgemäße Hochspannungserdkabelanordnung gemäß einer zweiten Ausführungsform im Querschnitt zeigt;
- Fig. 4: eine erfindungsgemäße Hochspannungserdkabelanordnung gemäß einer dritten Ausführungsform im Querschnitt zeigt; und
- Fig. 5: eine erfindungsgemäße Hochspannungserdkabelanordnung gemäß einer vierten Ausführungsform im Querschnitt zeigt.

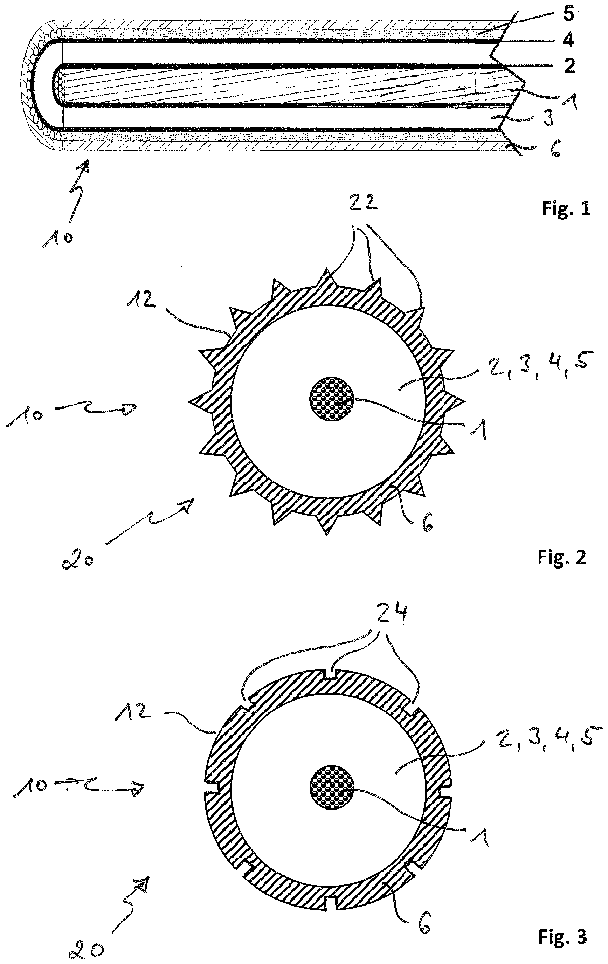

Die Fig. 1 zeigt ein an sich herkömmliches Hochspannungserdkabel 10 im Längsschnitt. Derartige Hochspannungserdkabel 10 sind üblicherweise im Querschnitt axialsymmetrisch aufgebaut und weisen im Zentrum einen elektrischen Leiter 1 für den Stromtransport auf, welcher üblicherweise aus Kupfer oder Aluminium besteht. Umgeben wird der elektrische Leiter 1 von mehreren Isolationsmaterialschichten 2, 3, 4 in Form von beispielsweise einer elektrisch schwach leitfähigen Schicht 2, welche von dem eigentlichen Isolationsmaterial 3 und einer daran anschließenden schwach leitfähigen Schicht 4 umgeben sein kann. Die schwach leitfähige Schicht 4 kann wiederum von einer elektrischen Schirmung 5 umgeben sein, welche ihrerseits wiederum von einem Kabelmantel 6 aus beispielsweise PVC, PP oder PE umgeben ist, der die eigentliche Außenisolierung darstellt, um das Kabel 10 vor Umwelteinflüssen, Feuchtigkeit und mechanischen Schäden zu schützen. Die Schichten 2 bis 5, die sich in radialer Richtung zwischen dem Kabelmantel 6 und dem eigentlichen elektrischen Leiter 1 befinden, werden hier generisch auch als Isolationsmaterialschichten bezeichnet.

Um die Wärmeableitung von solch einem Hochspannungserdkabel 10 zu verbessern, ist es erfindungsgemäß nun vorgesehen, dass die Außenumfangsoberfläche 12 der Hochspannungserdkabelanordnung 20 profiliert ausgebildet ist, wie dies nachfolgend unter Bezugnahme auf die Fig. 2 bis 5 erläutert wird.

So zeigt die Fig. 2 im Querschnitt eine Hochspannungserdkabelanordnung 20, welche ein Hochspannungserdkabel 10 mit dem zuvor unter Bezugnahme auf die Fig. 1 beschriebenen Schichtenaufbau mit den Schichten 2 bis 6 sowie dem zentral angeordneten elektrischen Leiter 1 aufweist. Erfindungsgemäß ist es nun zur Verbesserung der Wärmeableitung von dem Kabel 10 vorgesehen, dass dessen Außenumfangsoberfläche 12 des Kabelmantels 6 profiliert ausgebildet ist, wobei bei der hier dargestellten Ausführungsform die Profilierung durch mehrere in Längsrichtung der Hochspannungserdkabelanordnung 10 verlaufende Rippen bzw. Grate 22 gebildet wird, die bei der hier dargestellten Ausführungsform im Querschnitt betrachtet eine dreieckige Gestalt aufweisen. Die Rippen 22 können jedoch selbstverständlich auch jede andere Gestalt aufweisen. Beispielsweise können die Rippen 22 im Querschnitt betrachtet rund, insbesondere halbkreisförmig, I-, T-, V- oder Y-förmig ausgebildet sein. Anstelle in Längsrichtung der Hochspannungserdkabelanordnung 20 verlaufender Rippen 22 kann die Profilierung der Außenumfangsoberfläche 12 jedoch auch beispielsweise durch eine Vielzahl diskreter Erhebungen gebildet werden, die von der Außenumfangsoberfläche 12 des Kabelmantels 6 nach außen abstehen.

Die Ausführungsform gemäß der Fig. 3 unterscheidet sich von der Ausführungsform gemäß Fig. 2 dadurch, dass anstelle der Rippen 22 eine Vielzahl von Nuten bzw. Kerben 24 in der Außenumfangsoberfläche 12 des Kabelmantels 6 ausgebildet sind, die sich wie die Rippen 22 in Längsrichtung der Hochspannungserdkabelanordnung 20 erstrecken. Obwohl hier insgesamt nur acht derartige Nuten 24 dargestellt sind, sollte einzusehen sein, dass die Oberfläche der Hochspannungserdkabelanordnung 20 zu Zwecken der Wärmeableitung mit zunehmender Anzahl von Nuten 24 zunimmt, so dass es gegebenenfalls sinnvoll sein kann, mehr als acht derartiger Nuten 24 vorzusehen. Anstelle von sich in Längsrichtung der Hochspannungserdkabelanordnung 20 erstreckender Nuten 24 kann die Profilierung jedoch auch beispielsweise durch eine Vielzahl diskreter Vertiefungen gebildet werden, die in der Außenumfangsoberfläche 12 des Kabelmantels 6 ausgebildet sind.

Bei den zuvor unter Bezugnahme auf die Fig. 2 und 3 beschriebenen Ausführungsformen ist es vorgesehen, dass die Hochspannungserdkabelanordnung 20 unmittelbar im Erdreich verlegt wird, so dass aufgrund der profilierten Ausbildung des Kabelmantels 6 selbst dessen Oberfläche vergrößert ist, wodurch die Wärmeübertragung an das Erdreich verbessert werden kann.

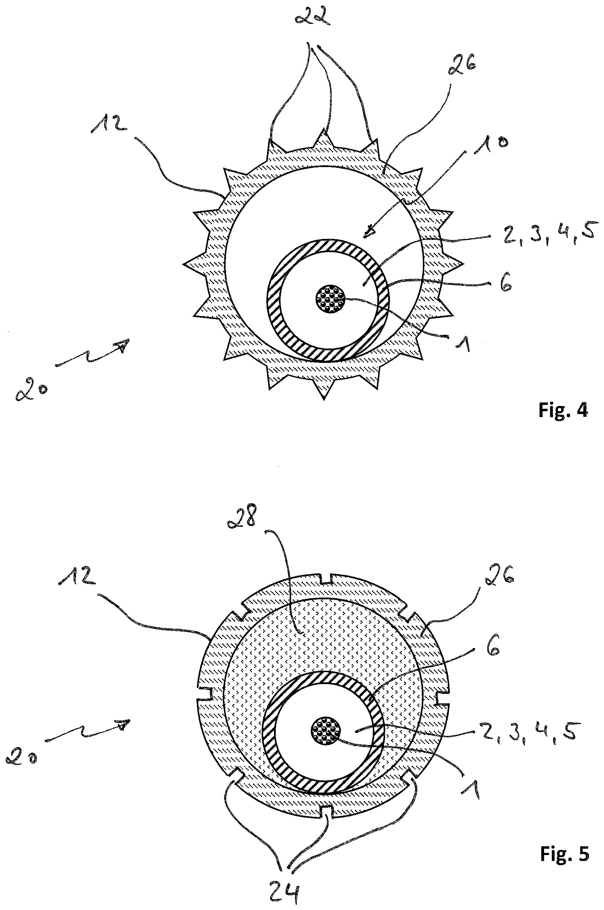

Anstelle das Hochspannungserdkabel 10 direkt im Erdreich zu verlegen, kann das Kabel 10 jedoch auch in einem Leer- bzw. Kabelschutzrohr 26 aus beispielsweise PVC, PP oder PE im Erdreich verlegt werden, wie dies in den Fig. 4 und 5 dargestellt ist. Obwohl auch hier das Hochspannungserdkabel 10 und insbesondere dessen Kabelmantel 6 wie beiden Ausführungsformen gemäß Fig. 2 und 3 zur Verbesserung der Wärmeableitung profiliert sein kann, weist bei der konkreten Ausführungsform gemäß den Fig. 4 und 5 der Kabelmantel 6 des Hochspannungserdkabels 10 selbst keine Profilierung auf; vielmehr wird bei diesen Ausführungsformen die Außenumfangsoberfläche 12 der Hochspannungserdkabelanordnung 20 durch das Kabelschutzrohr 26 gebildet, wobei dieses zur Verbesserung der Wärmeableitung außenumfangsseitig gemäß Fig. 4 eine Vielzahl von in Längsrichtung der Hochspannungserdkabelanordnung 20 verlaufender Rippen 22 oder gemäß Fig. 5 eine Vielzahl von in Längsrichtung der Hochspannungserdkabelanordnung 20 verlaufender Nuten 24 aufweisen kann. Zusätzlich oder alternativ hierzu kann auch hier die Profilierung des Kabelschutzrohrs 26 durch eine Vielzahl diskreter Erhebungen, die von der Außenumfangsoberfläche 12 des Kabelschutzrohrs 26 nach außen abstehen, und/oder durch eine Vielzahl diskreter Vertiefungen gebildet werden, die in der Außenumfangsoberfläche 12 des Kabelschutzrohrs 26 ausgebildet sind.

Bei der Ausführungsform gemäß Fig. 5 kann der Abstand, den das Kabel 10 gegenüber der Innenwand des Kabelschutzrohrs 26 aufweist zur Verbesserung der Wärmeübertragung auf das Kabelschutzrohr 26 mit einem festen Material 28 wie beispielsweise Bentonit verfüllt sein, wobei eine derartige Verfüllung des Kabelschutzrohrs 26 selbstverständlich auch bei der in der Fig. 4 dargestellten Ausführungsform mit geripptem Kabelschutzrohr möglich ist.

### Bezugszeichenliste

- 1: elektrischer Leiter
- 2: elektrisch schwach leitfähige Schicht
- 3: Isolationsschicht
- 4: elektrisch schwach leitfähige Schicht
- 5: elektrische Schirmung
- 6: Kabelmantel
- 10: Hochspannungserdkabel
- 12: Außenumfangsoberfläche
- 20: Hochspannungserdkabelanordnung
- 22: Rippen
- 24: Nuten
- 26: Kabelschutzrohr
- 28: festes Material, bspw. Bentonit

## Patentansprüche

1. Hochspannungserdkabelanordnung (20) für den Betrieb mit Spannungen von zumindest 110 kV, insbesondere von zumindest 320 kV DC bzw. 380 kV AC und insbesondere vorzugsweise bei 525 kV DC, mit einem Kabel (10), das
- einen elektrischen Leiter (1), vorzugsweise aus Kupfer oder Aluminium,
- zumindest eine Isolationsmaterialschicht (2, 3, 4, 5) die den elektrischen Leiter (1) umgibt, und
- einen Kabelmantel (6) umfasst, der die zumindest eine Isolationsmaterialschicht (2, 3, 4, 5) umgibt;
**dadurch gekennzeichnet, dass**
die Hochspannungserdkabelanordnung (20) zur Wärmeableitung an Erdreich, das die Hochspannungserdkabelanordnung (20) umgibt, eine profilierte Außenumfangsoberfläche (12) aufweist.

2. Hochspannungserdkabelanordnung nach zumindest einem der vorstehenden Ansprüche,
**dadurch gekennzeichnet, dass**
die Profilierung der Außenumfangsoberfläche (12) gebildet ist durch mehrere Erhebungen, die von der Außenumfangsoberfläche (12) abstehen, mehrere Vertiefungen, die in der Außenumfangsoberfläche (12) ausgebildet sind, und/oder eine Vielzahl von durch Aufrauen der Außenumfangsoberfläche (12) entstandene Oberflächenunebenheiten, vorzugsweise in Form von Schuppen und/oder Fäden.

3. Hochspannungserdkabelanordnung nach Anspruch 2,
**dadurch gekennzeichnet, dass**
die Erhebungen die Gestalt von von der Außenumfangsoberfläche (12) abstehen Rippen (22) aufweisen und/oder die Vertiefungen die Gestalt von in der Außenumfangsoberfläche (12) ausgebildeten Nuten (24) aufweisen, wobei die Rippen (22) und/oder die Nuten (24) vorzugsweise längs der Hochspannungserdkabelanordnung (20) verlaufen.

4. Hochspannungserdkabelanordnung nach Anspruch 3,
**dadurch gekennzeichnet, dass**
eine maximale Höhe der Erhebungen zwischen 20 und 400%, vorzugweise zwischen 40 und 300% und insbesondere vorzugsweise zwischen 70 und 200%, der Dicke des Kabelmantels entspricht, und/oder eine maximale Tiefe der Vertiefungen zwischen 10 und 90%, vorzugweise zwischen 20 und 80% und insbesondere vorzugsweise zwischen 30 und 70%, der Dicke des Kabelmantels entspricht.

5. Hochspannungserdkabelanordnung nach Anspruch 3 oder 4,
**dadurch gekennzeichnet, dass**
die Rippen (22) einstückig mit der Außenumfangsoberfläche (12) ausgebildet, vorzugsweise mit dieser extrudiert sind, und/oder dass die Nuten (24) in die Außenumfangsoberfläche eingearbeitet sind.

6. Hochspannungserdkabelanordnung nach zumindest einem der vorstehenden Ansprüche,
**dadurch gekennzeichnet, dass**
der Kabelmantel (6) die profilierte Außenumfangsoberfläche (12) ausbildet.

7. Hochspannungserdkabelanordnung nach zumindest einem der Ansprüche 1 bis 5,
**dadurch gekennzeichnet , dass**
die Hochspannungserdkabelanordnung (20) ein Kabelschutzrohr (26) umfasst, in das das Kabel (10) eingezogen ist, wobei das Kabelschutzrohr (26) die profilierte Außenumfangsoberfläche (12) ausbildet.

8. Hochspannungserdkabelanordnung nach Anspruch 7,
**dadurch gekennzeichnet, dass**
eine Innenwand des Kabelschutzrohrs (26) eine profilierte Oberfläche aufweist.

9. Hochspannungserdkabelanordnung Anspruch 7 oder 8,
**dadurch gekennzeichnet, dass**
das Kabel (10) gegenüber einer Innenwand des Kabelschutzrohrs (26) zumindest bereichsweise durch einen Abstand beabstandet ist, wobei dieser Abstand mit Luft oder mit einem festen Material (28), vorzugsweise mit Bentonit (28), zur Wärmeübertragung von dem Kabel (10) auf das Kabelschutzrohr (26) verfüllt ist.

10. Hochspannungserdkabelanordnung nach zumindest einem der vorstehenden Ansprüche,
**dadurch gekennzeichnet, dass**
der Kabelmantel (6) und/oder das Kabelschutzrohr (26) aus einem Kunststoffmaterial gefertigt ist/sind, insbesondere aus PVC, PP oder PE.
